Europäisches Patentamt

(19) European Patent Office

Office européen des brevets

(11) Numéro de publication : **0 354 085 B1**

(12) **FASCICULE DE BREVET EUROPEEN**

(45) Date de publication du fascicule du brevet :
**16.10.91 Bulletin 91/42**

(51) Int. Cl.⁵ : **B60T 13/14,** B60T 8/26,
B60T 8/18, B60T 15/04

(21) Numéro de dépôt : **89402036.1**

(22) Date de dépôt : **18.07.89**

(54) **Doseur asservi à la charge pour double circuit de freinage de véhicule automobile.**

(30) Priorité : **27.07.88 FR 8810523**

(43) Date de publication de la demande :
**07.02.90 Bulletin 90/06**

(45) Mention de la délivrance du brevet :
**16.10.91 Bulletin 91/42**

(84) Etats contractants désignés :
**DE GB IT**

(56) Documents cités :
**EP-A- 0 041 020**
**FR-A- 2 074 521**
**GB-A- 2 051 985**
**GB-A- 2 179 106**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Benet, Jean**
**11, avenue Georges**
**F-93220 Gagny (FR)**

(74) Mandataire : **Boivin, Claude**
**9, rue Edouard-Charton**
**F-78000 Versailles (FR)**

## Description

La présente invention concerne un dispositif de dosage pour installation de freinage de véhicules automobiles comprenant deux circuits indépendants et comportant deux tiroirs de commande coulissants permettant l'alimentation en fluide sous pression de chaque circuit, le premier tiroir étant sensible à un dispositif actionné par le conducteur et contrôlant la pression de fluide admise dans un premier circuit à partir d'une première source de fluide sous pression, par exemple un accumulateur hydropneumatique, le second tiroir étant soumis à une de ses extrémités à la pression de fluide du premier circuit et à son autre extrémité à la pression de fluide du second circuit, ce second tiroir contrôlant la pression du deuxième circuit à partir d'une deuxième source de fluide sous pression, par exemple un accumulateur hydropneumatique.

Un dispositif de ce genre est décrit dans FR-A-2.482.917. Dans ce dispositif connu, les deux circuits sont respectivement le circuit de freinage avant et le circuit de freinage arrière et il est prévu un modulateur ou correcteur de la pression des freins arrière en fonction de la charge.

Mais la commande des freins est souvent assurée maintenant par deux circuits disposés en X, c'est-à-dire assurant chacun l'alimentation d'une roue avant et celle de la roue arrière opposée. Dans ce cas, si l'on désire assurer une correction de la pression des freins arrière, il faut prévoir un correcteur sur chacun des circuits.

La présente invention a pour objet un dispositif de dosage pour installation de freinage comprenant deux circuits indépendants disposés en X.

Ce dispositif est caractérisé en ce que chacun des circuits alimente respectivement les cylindres d'une roue avant et d'une roue arrière, par exemple diagonalement opposée, en ce que chacun des tiroirs de commande délivre par un premier conduit une pression d'utilisation de freinage avant et par un second conduit disposé dans un même plan que le premier conduit, une pression d'utilisation de freinage arrière et en ce que des moyens de correction de la pression de freinage arrière en fonction de la charge du véhicule sont prévus à l'intérieur du dispositif de dosage et alimentés en fluide sous pression par lesdits seconds conduits.

On a décrit ci-après, à titre d'exemple non limitatif, un mode de réalisation du dispositif de freinage selon l'invention, avec référence aux dessins annexés dans lesquels :

La Figure 1 est un schéma de l'installation de freinage ;

La Figure 2 est une vue en élévation du doseur ;

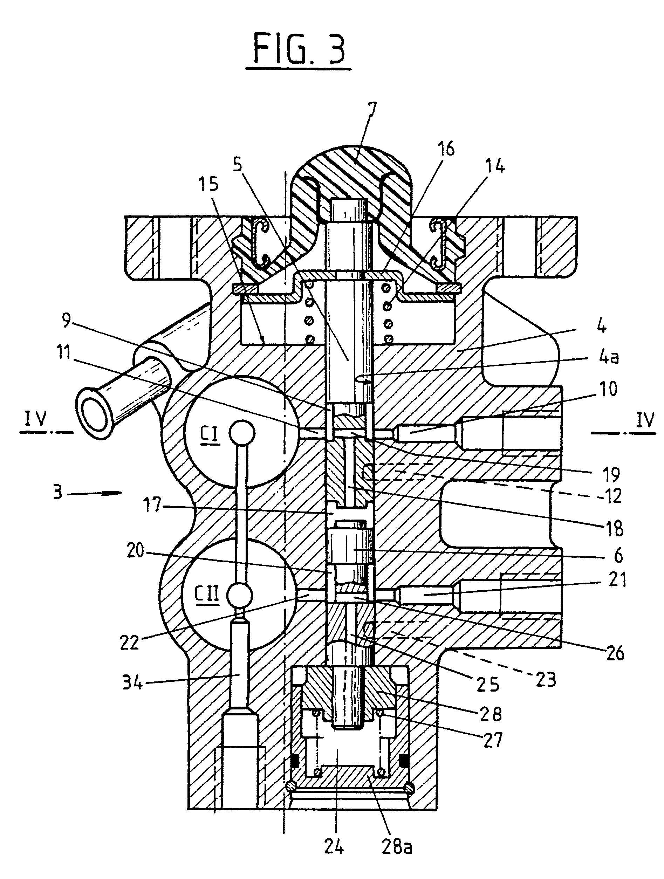

La Figure 3 en est une coupe suivant III-III de la Figure 4 ;

La Figure 4 en est une coupe suivant IV-IV de la Figure 3.

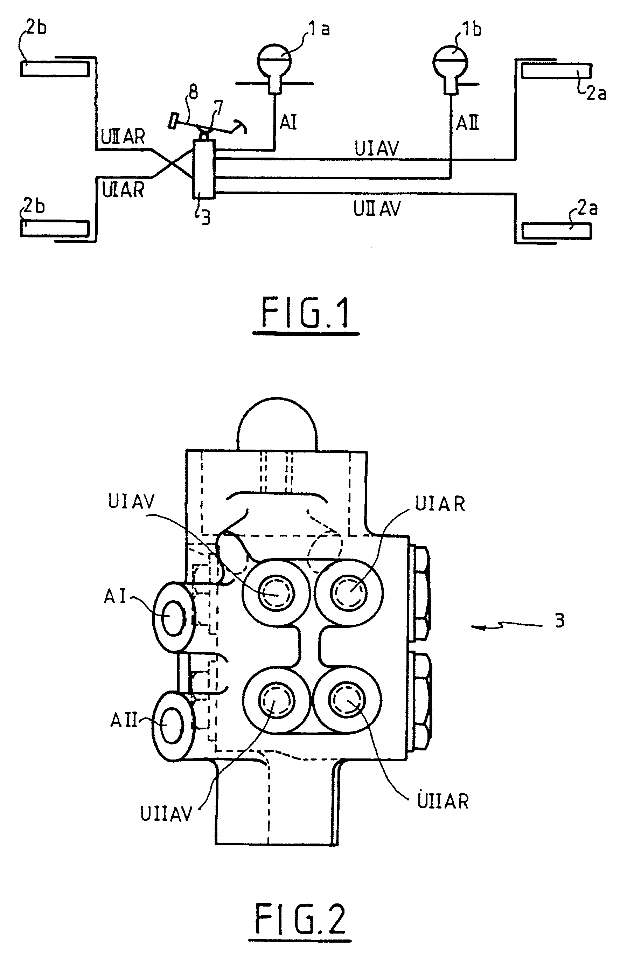

A la Figure 1 on voit une installation de freinage d'un véhicule automobile qui comporte deux circuits de freinage indépendants. Le premier comprend un conduit d'alimentation AI qui est relié à un accumulateur hydropneumatique 1a et un circuit d'utilisation qui comporte le circuit de freinage UIAV de l'une des roues avant 2a et le circuit de freinage UIAR de la roue arrière 2b opposée. Le second circuit comprend de manière analogue un circuit d'alimentation AII qui est relié à un accumulateur hydropneumatique 1b et un circuit d'utilisation qui comporte le circuit de freinage UIIAV de l'autre roue avant 2a et le circuit de freinage UIIAR de l'autre roue arrière 2b. Ces divers circuits sont reliés entre eux par un dispositif de dosage qui est désigné au dessin d'une façon générale par la référence 3.

Le dispositif de dosage 3 est constitué par un corps 4 présentant un alésage 4a dans lequel peuvent coulisser deux tiroirs 5 et 6 disposés coaxialement. Ces tiroirs 5 et 6 forment deux éléments de commande permettant l'alimentation en fluide sous pression des circuits avant et arrière.

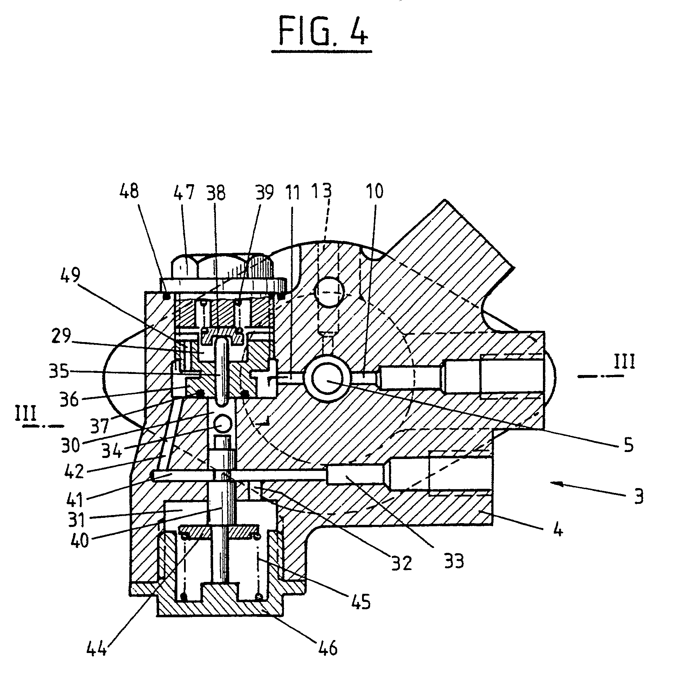

Sur l'extrémité externe du tiroir 5 est emmanché un tampon en matière élastomère 7 propre à être déplacé par une pédale 8 actionnée par le conducteur. Ce tiroir 5 est muni d'une gorge annulaire 9 disposée en regard d'un perçage ou conduit 10 relié au circuit UIAV et d'un perçage ou conduit 11 disposé dans le même plan que le conduit 10 et relié au circuit UIAR par l'intermédiaire d'un correcteur désigné d'une façon générale par la référence CI. Cette gorge 9 est propre à mettre en communication, selon la position du tiroir 5, les perçages 10 et 11 soit avec un perçage 12 relié au circuit AI, soit avec un conduit d'échappement 13 (voir Figure 4).

Le tiroir 5 est normalement maintenu en position de fermeture des perçages 10 et 11 et d'ouverture du perçage 12 par un ressort 14 disposé entre le fond 15 d'un évidement du corps 4 et une coupelle 16 bloquée axialement sur le tiroir 5.

L'extrémité du tiroir 5 opposée au tampon 7 est soumise à la pression de fluide dans le circuit UIAV, cette pression régnant dans la chambre 17 comprise entre les deux tiroirs 5 et 6. Cette chambre 17 est reliée au conduit UIAV par un perçage axial 18 du tiroir 5 et un perçage radial 19 débouchant dans la gorge annulaire 9.

Le tiroir 6 est sensible à la pression de fluide dans le circuit UIAV puisque la face du tiroir 6 limitant la chambre 17 est soumise à la pression régnant dans cette chambre, c'est-à-dire la pression du circuit UIAV.

Ce tiroir 6 est muni d'une gorge annulaire 20 disposée en regard d'un perçage 21 relié au circuit UIIAV et d'un perçage 22 relié au circuit UIIAR par l'intermédiaire d'un correcteur désigné d'une façon générale par la référence CII. Cette gorge 20 est propre à mettre en communication, selon la position du tiroir 6, les perçages 21 et 22, soit avec un perçage 23 relié au circuit AII, soit avec un conduit d'échappement analogue au conduit 13.

Le tiroir 6 est soumis, à son extrémité éloignée du tiroir 5 à la pression du fluide dans le circuit UIIAV ; cette pression règne dans une chambre 24 entourant l'extrémité du tiroir 6, cette chambre 24 étant reliée au perçage 21 par un perçage axial 25 du tiroir 6 et un perçage radial 26 débouchant dans la gorge annulaire 20. Le tiroir 6 est en outre soumis, à son extrémité éloignée du tiroir 5, à l'action d'un ressort 27 qui prend appui sur une bague 28 solidaire du tiroir 6 et maintient normalement ce tiroir en position de fermeture du perçage d'alimentation AII et de mise en communication des perçages 21 et 22 avec le conduit d'échappement ; le ressort 27 est maintenu par un bouchon 28a vissé dans le corps 4.

Les deux correcteurs CI et CII sont identiques. Le correcteur CI comporte trois chambres coaxiales 29, 30 et 31.

Le perçage 11 est en communication avec la chambre 29 de sorte que dans cette chambre règne la pression du circuit de freinage avant. La chambre 31 est en communication par un orifice 32 avec un perçage 33 auquel est relié le circuit de freinage arrière UIAR. La chambre intermédiaire 30 reçoit une pression, proportionnelle à la charge du véhicule, par exemple la pression délivrée par l'accumulateur hydropneumatique de suspension arrière, dans le cas d'un véhicule à suspension hydropneumatique.

Dans la chambre 29 est engagée l'une des extrémités d'une aiguille 35 qui est montée coulissante dans une pièce 36 vissée dans le corps 4 et portant un joint 37 assurant l'étanchéité entre les chambres 29 et 30. La communication dans la chambre 29 de part et d'autre de la pièce 36 est assurée par un perçage 49. L'aiguille est en appui sur une coupelle 38 sur laquelle agit un ressort 39 prenant appui sur un écrou 47 vissé dans le corps 4, l'étanchéité étant assurée par un joint 48. L'autre extrémité de l'aiguille se trouve dans la chambre 30.

Dans la chambre 31 peut coulisser un tiroir 40 muni d'une gorge 43 susceptible de mettre en communication le perçage 33 et un perçage 41 relié à la chambre 29 par un conduit 42. Le tiroir 40 présente un épaulement sur lequel prend appui une collerette 44 qui est soumise à l'action d'un ressort 45 maintenu par un chapeau 46 vissé dans le boîtier 4.

Au repos, la pression dans les chambres 29 et 31 est nulle. Mais la pression dans la chambre intermédiaire 30 a sa valeur normale proportionnelle à la charge sur l'essieu arrière. Cette pression supérieure à l'action antagoniste du ressort 45, maintient le tiroir 40 dans sa position ouverte, c'est-à-dire dans une position dans laquelle la gorge 43 relie les perçages 33 et 41.

Au début du freinage, la pression augmente dans les chambres 29 et 31 ; la pression dans la chambre 30 maintient le tiroir 40 ouvert de sorte que la pression dans les freins arrière est égale à celle des freins avant.

Lorsque l'effet combiné de la pression dans la chambre 31 et du ressort 45 équilibre celui de la pression dans la chambre 30, le tiroir 40 se ferme : c'est le point de coupure. A ce moment, le ressort 39 amène l'aiguille 35 au contact du tiroir 40.

A partir de ce moment, la régulation est assurée par un équilibre entre un accroissement de pression dans la chambre 29, qui est appliqué sur la section $s$ de l'aiguille 35 et un accroissement de pression dans la chambre 31 qui est appliqué sur la section $S$ du tiroir 40. L'accroissement de pression dans la chambre 30 est donc plus faible dans le rapport $s/S$. Au delà du point de coupure, la pression dans les freins arrière augmente moins que celle dans les freins avant, suivant la pente $s/S$.

Les faibles dimensions de l'aiguille 35 et du tiroir 40 permettent de miniaturiser l'appareil.

Le tiroir et l'aiguille pourraient être réalisés sous la forme d'un tiroir étagé mais le fait que l'aiguille et le tiroir n'aient pas entre eux de liaison mécanique fixe, élimine tous les mauvais fonctionnements qui pourraient résulter de mauvais alignement et défauts de concentricité.

## Revendications

1. Dispositif de dosage pour installation de freinage de véhicules automobiles comprenant deux circuits indépendants et comportant deux tiroirs de commande coulissants (5 et 6) permettant l'alimentation en fluide sous pression de chaque circuit, le premier tiroir (5) étant sensible à un dispositif (8) actionné par le conducteur et contrôlant la pression de fluide admise dans un premier circuit à partir d'une première source de fluide sous pression (1a), par exemple un accumulateur hydropneumatique, le second tiroir (6) étant soumis a une de ses extrémités à la pression de fluide du premier circuit et à son autre extrémité à la pression de fluide du second circuit, ce second tiroir (6) contrôlant la pression du deuxième circuit à partir d'une deuxième source de fluide sous pression (1b), par exemple un accumulateur hydropneumatique, caractérisé en ce que chacun des circuits alimente respectivement les cylindres d'une roue avant et d'une roue arrière, par exemple diagonalement opposée, et en ce que chacun des tiroirs de commande (5 et 6) délivre par un premier conduit (10 ou 21) une pression d'utilisation de freinage avant (UIAV et UIIAV) et par un second conduits (11 ou 22), disposé dans un même plan que le premier conduit (10 ou 21), une pression d'utilisation de freinage arrière (UIAR et UIIAR), et en ce que des moyens de correction CI et CII de la pression de freinage arrière en fonction de la charge du véhicule sont prévus à l'intérieur du dispositif de dosage et alimentés en fluide sous pression par lesdits seconds conduits (11 ou 22).

2. Dispositif selon la revendication 1, caractérisé en ce que les moyens de correction CI et CII sont respectivement constitués par des tiroirs étagés disposés dans des alésages parallèles et comprenant une première partie (40) de section S et une deuxième partie (35) de section s, une gorge (43) dans la partie (40) étant disposée sur le circuit d'alimentation des cylindres de frein arrière, ce tiroir (35-40) étant soumis dans une chambre (29) du côté de la section s à la pression du circuit avant et à l'action d'un ressort (39) et dans une chambre (31) à la pression d'utilisation du circuit de freinage arrière et à l'action d'un ressort (45), une pression proportionnelle à la charge du véhicule étant amenée dans une chambre intermédiaire (30) et agissant sur la section S-s du tiroir.

3. Dispositif selon la revendication 2, caractérisé en ce que le tiroir des moyens de correction est constitué par deux éléments, un tiroir (40) de section S et une aiguille (35) de section s.

4. Dispositif selon l'une des revendications 2 ou 3, caractérisé en ce que le véhicule est à suspension hydropneumatique et en ce que la pression régnant dans la chambre (30) est la pression délivrée par l'accumulateur de suspension arrière.

5. Dispositif selon l'une des revendications 2 à 4, caractérisé en ce que le conduit (11 où 22) débouche dans la chambre (29) qui est reliée au conduit d'alimentation des freins arrière (33) par un conduit (42), la gorge (43) du tiroir (40) étant disposée sur ce conduit (33) dont la pression d'utilisation est délivrée dans la chambre (31) par le perçage (32).

6. Dispositif selon l'une des revendications 3 à 5, caractérisé en ce que l'aiguille (35) est montée coulissante dans une pièce (36) vissée à l'intérieur du corps (4) du dispositif de dosage, le ressort (39) étant interposé entre une coupelle (38) reposant sur l'aiguille et un écrou (47) fermant la chambre (29), la pression dans la chambre (29) étant maintenue de part et d'autre de la pièce (36) grâce à un perçage (49), des joints toriques d'étanchéité (37 et 48) pressés entre d'une part le corps (4) du dispositif de dosage et la pièce (36) et d'autre part l'écrou (47) et le corps (4) du dispositif de dosage.

**Patentansprüche**

1. Dosiervorrichtung für Bremsanlagen von Kraftfahrzeugen mit zwei unabhängigen Bremskreisen, die zwei verschiebbare Steuerschieber (5 und 6) aufweist, welche die Zuführung der Druckflüssigkeit zu jedem Kreis ermöglichen, wobei der erste Schieber (5) auf eine Vorrichtung (8) anspricht, die vom Fahrer betätigt wird und den einem ersten Kreis von einer ersten Druckflüssigkeitsquelle (1a) beispielsweise einem hydropneumatischen Speicher aus zugeführten Druck kontrolliert und der zweite Schieber (6) an einem seiner Enden dem Flüssigkeitsdruck des ersten Kreises und an seinem anderen Ende dem Flüssigkeitsdruck des zweiten Kreises unterworfen ist und dieser zweite Schieber (6) den dem zweiten Kreis von einer zweiten Druckflüssigkeitsquelle (1b) beispielsweise einem hydropneumatischen Speicher aus zugeführten Druck kontrolliert, dadurch gekennzeichnet, daß jeder der Kreise jeweils die Zylinder eines Vorderrades und eines Hinterrades in beispielsweise diagonal aneinander gegenüberliegender Anordnung speist und daß jeder der Steuerschieber (5 und 6) über eine erste Leitung (10 oder 21) einen Arbeitsdruck (UIAV und UIIAV) für die vorderen Bremsen und über eine zweite Leitung (11 oder 22), welche in der gleichen Ebene liegt wie die erste Leitung (10 oder 21), einen Arbeitsdruck (UIAR und UIIAR) für die hinteren Bremsen abgibt und daß Korrekturmittel (CI und CII) für den Druck der hinteren Bremen in Abhängigkeit von der Belastung des Fahrzeugs im Inneren der Dosiervorrichtung vorgesehen und über die besagten zweiten Leitungen (11 oder 22) mit Druckflüssigkeit gespeist sind.

2. Dosiervorrichtung nach Anspruch 1, dadurch gekennzeichnet, daß die Korrekturmittel (CI und CII) jeweils durch mehrstufige Schieber gebildet werden, welche in parallelen Bohrungen angeordnet sind und einen ersten Teil (40) mit einem Querschnitt S und einem zweiten Teil (35) mit einem Querschnitt s aufweisen, wobei eine Nut (43) im ersten Teil (40) im Speisekreis der hinteren Bremszylinder angeordnet ist und dieser Schieber (35-40) in einer Kammer (29) an der Seite des Querschnitts s dem Druck des vorderen Kreises und der Wirkung einer Feder (39) und in einer Kammer (31) dem Arbeitsdruck des hinteren Bremskreises und der Wirkung einer Feder (45) unterworfen ist und ein der Belastung des Fahrzeugs proportionaler Druck einer Zwischenkammer (30) zugeführt wird und auf den Querschnitt S-s des Schiebers einwirkt.

3. Dosiervorrichtung nach Anspruch 2, dadurch gekennzeichnet, daß der Schieber der Korrekturmittel durch zwei Elemente gebildet wird, nämlich einen Schieber (40) mit dem Querschnitt S und einer Nadel (35) mit dem Querschnitt s.

4. Dosiervorrichtung nach Anspruch 2 oder 3, dadurch gekennzeichnet, daß das Fahrzeug eine hydropneumatische Radaufhängung aufweist und daß der in der Kammer (30) herrschende Druck der vom Speicher der hinteren Aufhängung gelieferte Druck ist.

5. Dosiervorrichtung nach einem der Ansprüche 2 bis 4, dadurch gekennzeichnet, daß die Leitung (11 oder 22) in die Kammer (29) mündet, die mit der Leitung (33) zur Speisung der hinteren Bremsen über eine Leitung (42) verbunden ist, wobei die Nut (43) des Schiebers (40) in dieser Leitung (33) angeordnet ist, deren Arbeitsdruck über die Bohrung (32) der Kammern (31) zugeführt wird.

6. Dosiervorrichtung nach einem der Ansprüche 3 bis 5, dadurch gekennzeichnet, daß die Nadel (35) gleitend in einem Bauteil (36) montiert ist, das in das Innere des Grundkörpers (4) der Dosiervorrichtung eingeschraubt ist, und die Feder (39) zwischen einem auf der Nadel ruhenden Federteller (38) und einer die Kammer (29) verschließenden Schraubenmutter (47) angeordnet ist, wobei der Druck in der Kammer (29) auf beiden Seiten des Bauteils (36) mittels einer Bohrung (49) sowie Runddichtringen (37 und 48), die zwischen den Grundkörper (4) der Dosiervorrichtung und das Bauteil (36) einerseits und zwischen die Schraubenmutter (47) und den Grundkörper (4) der Dosiervorrichtung andererseits eingepreßt sind, aufrechterhalten wird.

## Claims

1. Proportioning device for an automotive vehicle brake circuit including two independent circuits and comprising two control valves (5 and 6) enabling each circuit to be fed with fluid under pressure, the first valve (5) being sensitive to a device (8) actuated by the driver and controlling the fluid pressure admitted into a first circuit from a first under pressure fluid source (1a), such as a hydropneumatic accumulator, the second valve (6) being subjected at one of its extremities to the fluid pressure of the first circuit and, at its other extremity, to the fluid pressure of the second circuit, this second valve (6) controlling the pressure of the second circuit from a second under pressure fluid source (1b), such as a hydropneumatic accumulator, wherein each circuit respectively feeds the cylinders of one front wheel and one rear wheel, for example diagonally opposing, and wherein each control valve (5 and 6) delivers via a first pipe (10 or 21) a front brake use pressure (UIAV and UIIAV) and via a second pipe (11 or 22), disposed inside the same plane as the first pipe (10 or 21), a rear brake use pressure (UIAR and UIIAR), and wherein means CI and CII for correcting the rear brake pressure according to the load of the vehicle are provided inside the proportioning device and fed with fluid under pressure by said second pipes (11 or 22).

2. Device according to claim 1, wherein the correction means CI and CII are respectively constituted by stepped valves disposed in parallel bores and including one first section (40) with a section S and one second section (35) with a section s, a throat (43) in the section (40) being disposed on the circuit for feeding the rear brake cylinders, this valve (35-40) being subjected in a chamber (29) on the side of the section s to the pressure of the front circuit and to the action of a spring (39) and in a chamber (31) to the use pressure of the rear braking circuit and to the action of a spring (45), a pressure proportional to the load of the vehicle being brought into an intermediate chamber (30) and acting on the section S-s of the valve.

3. Device according to claim 2, wherein the valve of the correction means is constituted by two elements, one valve (40) with a section S and a pointer (35) with a section s.

4. Device according to claim 2 or 3, wherein the vehicle has hydropneumatic suspension and wherein the pressure existing in the chamber (30) is the pressure delivered by the rear suspension accumulator.

5. Device according to anyone of claims 1 to 4, wherein the pipe (11 or 22) opens into the chamber (29) which is connected to the pipe (33) for feeding the rear brakes by means of a pipe (42), the throat (43) of the valve (40) being disposed on this pipe (33) whose use pressure is delivered into the chamber (31) by the bore (32).

6. Device according to any one of claims 3 to 5, wherein the pointer (35) is mounted sliding into a piece (36) screwed inside the body (4) of the proportioning device, the sprint (39) being inserted between a cup (38) resting on the pointer and a nut (47) closing the chamber (29), the pressure in the chamber (29) being maintained on both sides of the piece (36) by means of a bore (49), O-ring joints (37 and 48) being pressed between firstly the body (4) of the proportioning device and the piece (36) and secondly the nut (47) and the body (4) of the proportioning device.

## FIG.1

## FIG.2

# FIG. 3

# FIG. 4